Europäisches Patentamt

European Patent Office

Office européen des brevets

(19)

(11) **EP 0 561 249 B1**

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(51) Int Cl.[6]: **C08F 8/00**

(21) Anmeldenummer: **93103667.7**

(22) Anmeldetag: **08.03.1993**

(54) **Polymerharze und deren Verwendung**

Polymer resins and use thereof

Résines polymères et leur application

(84) Benannte Vertragsstaaten:
**DE ES FR GB IT**

(30) Priorität: **19.03.1992 DE 4208793**

(43) Veröffentlichungstag der Anmeldung:
**22.09.1993 Patentblatt 1993/38**

(73) Patentinhaber:
- **BAYER AG**
  **D-51368 Leverkusen (DE)**
- **BAYER ANTWERPEN N.V.**
  **B-2040 Antwerpen (BE)**

(72) Erfinder:
- **Audenaert, Raymond, Dr.**
  **B-9220 Hamme (BE)**
- **Kirchmeyer, Stephan, Dr.**
  **W-5090 Leverkusen 1 (DE)**
- **Sirinyan, Kirkor, Dr.**
  **W-5060 Bergisch Gladbach 2 (DE)**
- **Henning, Wolfgang, Dr.,**
  **Sumitomo Bayer Ur. Co.Ltd.**
  **Hyogo Pref. (JP)**

(74) Vertreter: **Weber, Gerhard, Dr.**
**D-51368 Leverkusen (DE)**

(56) Entgegenhaltungen:
**EP-A- 0 122 340      DE-A- 2 005 482**

- **PATENT ABSTRACTS OF JAPAN vol. 11, no. 30 (C-400)(2477) 29. Januar 1987**

**Beschreibung**

Die Erfindung betrifft Polymerharze, die in Wasser dispergierbar oder löslich sind, sowie deren Verwendung als Beschichtungs- und Überzugsmittel, als Klebstoff und als Filmbildner für Glasfaserschlichten.

In den deutschen Offenlegungsschriften 3 909 217 und 3 939 760 wird empfohlen, Lackierungen, die zusätzlich einen Haftvermittler auf der Basis von halogenhaltigen chemisch modifizierten amorphen Polyolefinen mit funktionellen Gruppen enthalten, zum direkten Lakkieren von Kunststoff-Spritgußteilen zu verwenden. Hierbei handelt es sich um Lacksysteme, die organische Lösungsmittel in Mengen von 40 bis 80 Gew.-% enthalten. Aus ökologischen Gründen wünschenswert und von großem Vorteil waren jedoch wäßrige Dispersionen oder Lösungen, die keine organischen Lösungsmittel enthalten. Insbesondere bei der Beschlichtung von Glasfasern können ausschließlich wäßrige Dispersionen oder Lösungen aufgetragen werden.

Wäßrige Dispersionen auf Basis von Polyolefinen sind an sich bekannt. Diese werden vornehmlich auf dem Weg der Emulsionspolymerisation hergestellt. Es ist ferner bekannt, daß Dispersionen auf Basis chlorierter Polyolefine als Haftvermittler zur Lackierung von Kunststoff-Spritzgußteilen (DE-OS 3 910 901), sowie als Klebstoffe für Polyolefin-Kunststoffe (EP-A 0 325 861) geeignet sind. Bei den den Dispersionen zugrundeliegendenden Polymeren handelt es sich um herkömmliche Polyolefine, die als Primer auf Kunststoff-Spritzgußteilen appliziert werden. Diese Systeme haben den Nachteil, daß sie mit herkömmlichen polaren Bindemitteln und Hilfsmitteln wie Polyurethanen (PUR), Acrylaten, Polyestern, Polyethern und Silanen weitgehend unverträglich sind und somit in Kombination mit besagten Hilfe- und Bindemitteln nicht direkt appliziert werden können. Der hohe kristalline Polymeranteil führt außerdem zu einem schlechten Verlauf.

Aufgabe war es daher, Polymerharze zur Verfügung zu stellen, die sich durch gute Substrathaftung, hervorragende Verträglichkeit mit polaren Bindemitteln und Hilfsstoffen und durch ausgezeichneten Verlauf (Filmbildung) auszeichnen und die außerdem gut in Wasser dispergierbar oder löslich sind.

Diese Aufgabe konnte durch die erfindungsgemäßen Polymerharze gelöst werden.

Gegenstand der Erfindung sind Polymerharze, die in Wasser dispergierbar oder löslich sind und die dadurch gekennzeichnet sind, daß das Harz aus einem amorphen, chlorierten, chemisch modifizierten Co- oder Terpolymer auf Basis von Polyethylen, Polybuten und/oder Polypropylen mit einem amorphen Polypropylenanteil von mindestens 50 Gew.-% besteht, eine mittlere Molmasse von 10.000 bis 100.000 g/Mol, eine Uneinheitlichkeit[*]) von 1,0 bis 6,5 und einen Chlorgehalt von 2,5 bis 50 Gew.-% aufweist und anionische oder kationische Salzgruppen in einer Menge von 5 bis 250 Milliäquivalenten pro 100 g Polymerharz und Polyoxyalkylen-Einheiten in einer Menge von 0 bis 40 Gew.-% enthält, wobei der Anteil von Oxyethylen-Einheiten mindestens 30 Gew.-% der Oxyalkylen-Einheiten beträgt.

Bevorzugt weisen die Polymerharze eine mittlere Molmasse von 15000 bis 80000, insbesondere 15000 bis 60000 g/Mol, eine Uneinheitlichkeit von 1,5 bis 4,5 und einen Gehalt an chemisch gebundenem Chlor von 15 bis 40 Gew.-%, vorzugsweise von 20 bis 35 Gew.-%, auf und enthalten anionische oder kationische Salzgruppen in einer Menge von 20 bis 120 Milliäquvalenten pro 100 g Polymerharz sowie Polyoxyalkylen-Einheiten in einer Menge von 0 bis 20 Gew.-%, wobei der Anteil von Oxyethylen-Einheiten mindestens 30 Gew.-% der Oxyalkylen-Einheiten beträgt.

Alle Angabe bezüglich der Molmasse der erfindungsgemäßen Harze und der zu ihrer Herstellung eingesetzten Polymerisate beziehen sich auf das Gewichtsmittel $\overline{M}$ w, wie es nach der Methode der Gelpermeationschromatographie unter Verwendung von Polystyrol als Standard bestimmt werden kann.

Die erfindungsgemäßen Polymerharze sind in Wasser dispergierbar oder löslich und werden in dieser Form ihren diversen Verwendungszwecken zugeführt.

Bevorzugt werden diesen Dispersionen oder Lösungen weitere Hilfsmittel zugesetzt.

Der Anteil der erfindungsgemäßen Polymerharze in der wäßrigen Dispersion oder Lösung beträgt vorzugsweise 5 bis 70 Gew.-%, besonders bevorzugt 20 bis 50 Gew.-%.

Die erfindungsgemäßen wäßrigen Dispersionen beziehungsweise Lösungen werden als Beschichtungs- und Überzugsmittel, als Haftvermittler (z.B. für die Lakkierung von Polyolefinen), als Klebstoff oder als Filmbildner für Glasfaserschlichten verwendet.

Gut geeignete anionische Salzgruppen sind beispielsweise Carboxyl-, Sulfonsäure- oder Phosphonsäuregruppen, welche mit Basen, beipielsweise Ammoniak, Natrium- oder Kaliumhydroxid oder Aminen wie z.B. Triethylamin oder Dimethylethanolamin neutralisiert wurden. Weiterhin geeignet sind beispielsweise mit Basen neutralisierte Cyanharnstoffgruppen, wie sie durch Umsetzung von Isocynatgruppen mit Cyanamid erhältlich sind.

Als kationische Gruppen kommen vorzugsweise Ammoniumgruppen in Frage, beispielsweise solche durch Umsetzung von tertiären Amingruppen mit Sauren wie z.B. Essigsäure, Milchsaure, Dibutylphosphat oder Salzsäure erhaltenen.

Die anionischen oder kationischen Salzgruppen sind in dem Polymerharz in einer solchen Menge enthalten, daß der Gehalt an anionischen oder kationischen Salzgruppen 5 bis 250, vorzugsweise 20 bis 120, Milliäquivalente pro 100 g Polymerharz beträgt. Das Poly-

[*]) Uneinheitlichkeit =

$$\frac{Mw}{Mn}$$

Mw: gewichtsmäßiges Mittel des Polymer-Molekulargewichtes
Mn: zahlenmäßiges Mittel des Polymer-Molekulargewichtes

merharz kann darüber hinaus einen Gehalt von 0 bis 40, vorzugsweise 0 bis 20, Gew.-% Oxyalkylen-Einheiten in Form von Polyoxyalkylen aufweisen. Polyoxyalkylene sind beispielsweise Polyethylenglykole oder Polyoxyethylen/Poly-1,2-oxypropylen-Blockcopolyether, welche über geeignete Verknüpfungsreaktionen an das Polymerharz angebunden wurden. Der gewichtsmäßige Anteil von Oxyethylen-Einheiten in dem Polyoxyalkylen beträgt mindestens 30 Gew.-%.

Zusätzlich zu den Salzgruppen oder Polyoxyalkylenen können weitere Stickstoff, Sauerstoff, Schwefel und/oder Silicium aufweisende funktionelle Gruppen in dem Polymerharz enthalten sein, welche eine Verträglichkeit der Polymerharze mit herkömmlichen polaren Hilfs- oder Bindemitteln und sonstigen Zusatzstoffen bewirken oder zumindest verbessern können. Zudem können diese funktionellen Gruppen auch die gute physikalische Fixierung der Polymerharze in der Bindemittelmatrix beziehungsweise auf der Verstärkungsfaseroberfläche positiv beeinflussen

Gut geeignete funktionelle Gruppen sind beispielsweise Carbonsäureanhydrid-, Carbonsäureester-, Carbonsäureamid-, Bis-carbonsäureimid-, Aldehyd-, Keton-, Sulfonsäureester-, Hydroxy-, Hydroperoxid- oder Alkoxysilangruppen oder auch heterocyclische Gruppierungen wie Imidazol-, Carbazol- oder Pyridinylgruppen oder schließlich auch aktivierte Doppelbindungen enthaltende Gruppen wie Vinylsulfonyl-oder Vinylaminogruppen, sowie schließlich auch Mercaptogruppen. Besonders gut geeignete funktionelle Gruppen sind Hydroxyl-, Hydroperoxy-(H-O-O-), Carboxyl-, Carbonsäureanhydrid-, Bis-carbonsäureamid-, Carbonsäureimid-, Carbonsäureester-, Amino- und Alkoxysilangruppen, insbesondere Trimethoxy-oder Triethoxysilangruppen.

Zur Herstellung der erfindungsgemäßen waßrigen Dispersion oder Lösung werden als Ausgangsmaterialien amorphe Co- beziehungsweise Terpolymerisate auf der Basis von Ethylen, Buten und/oder Propylen mit einem Propylenanteil von mindestens 50 Gew.-%, mit einer mittleren Molmasse von 10.000 bis 120.000 g/Mol und einer Uneinheitlichkeit von 1,0 bis 7,5 eingesetzt. Es ist jedoch auch möglich, als Ausgangsmaterial entsprechende amorphe Copolymerisate des Propylens mit anderen olefinisch ungesättigten Monomeren wie beispielsweise Ethylen, Isopren und Butadien der genannten Molmasse- und Uneinheitlichkeitsbereiche einzusetzen, wobei bei der Herstellung der genannten Copolymerisate des Propylens die Comonomeren in Mengen von 3 bis 50 Gew.-%, bezogen auf das Gewicht aller Monomeren, zum Einsatz gelangen können.

Die Einführung von Chlor erfolgt in an sich bekannter Weise durch Chlorierung der als Ausgangsmaterial dienenden amorphen Polyolefine (Houben-Weyl, "Methoden der organischen Chemie", Band V13, S. 511-551, Georg Thieme Verlag, Stuttgart 1962). Zur Herstellung der erfindungsgemäßen Polymerharze wird die Chlorierung bei Temperaturen von ca. -10°C bis zum jeweiligen Siedepunkt des eingesetzten Lösungsmittels vorgenommen.

Der Einbau der funktionellen Gruppen kann durch Umsetzung mit herkömmlichen Peroxiden (Einbau von Hydroperoxid- oder Carboxylgruppen) beziehungsweise durch radikalisch initiierte Pfropfreaktion mit Monomeren, die die erfindungsgemäßen funktionellen Gruppen aufweisen, vorgenommen werden. Als Initiatoren können die bekannten Peroxide oder Azoverbindungen verwendet werden. Die Modifizierungsreaktionen sind an sich bekannt und werden beispielsweise in folgenden Literaturstellen beschrieben: G.A. Russel, J. Am. Chem. Soc., 79 (1957) 3871; M. Irving et. al., Polymer Degradation and Stability 5 (1983) 467; N.G. Gaylord, J. Polym. Sci. Polym. Lett. Ed., 21 (1983) 23-30; A. Neyishi et. al., J. Appl. Polm. Sci., 22 (1978) 2953; A. Hoff, J. Appl. Polm. Sci., 29 (1984) 465.

Geeignete Initiatoren sind beispielsweise Kaliumperoxodisulfat, Azo-bis-isobutyronitril, t-Butylperbenzoat, t-Amyl-perneodecanoat, p-Benzodinen, t-Butylperisononanoat, Di-2-ethylhexylperoxydicarbonat oder Di-n-butylperoxydicarbonat.

Geeignete Monomeren mit funktionellen Gruppen sind beispielsweise Acrylsäure, Methacrylsäure, Itaconsäure, Vinylsulfonsäure, Vinylphosphonsäure, Allylamin, Allylalkohol, Trimethoxyvinylsilan, Triethoxyvinylsilan, Ethylallyether, Cyclohexen-1-dicarbonsäureanhydrid-4, Maleinsäureanhydrid, Maleinsäuredimethyl-, -diethyl-, -dipropyl- und -dibutylester beziehungsweise deren Säureamide wie Maleinsäurediethylamid usw., n-Alkylmaleinsäureimide wie beispielsweise n-Propyl-Maleinimid oder n-Butylmaleinsäureimid, Fumarsäure, Fumarsäuredimethyl-, -diethyl-, -dipropyl-beziehungsweise -dibutylester beziehungsweise deren Säureimide oder -amide, 3-Trimethoxysilyl-1-chlorpropan, N-[2-(Trimethoxysilyl)ethyl]ethylendiamin, 3-Trimethoxysilyl-1-chlorpropan, Mercaptopropyl-, Mercaptobutyltrimethoxybeziehungsweise -triethoxysilan, ferner Vinylencarbonat, Vinylsulfon, 3-Trimethoxysilylpropyl-1-imidazol beziehungsweise -cabazol. Geeignete Monomere sind im allgemeinen solche, die mit den Polyolefinen nicht zu Blockcopolymerisaten reagieren.

Der Einbau von funktionellen Gruppen kann sowohl in der Schmelze mit Hilfe von Extrudern oder anderen üblichen Hochviskosmischaggregaten bei Temperaturen von ca. 140 bis 300°C, vorzugsweise jedoch bei Temperaturen oberhalb des Schmelzbereiches derjeweils eingesetzten Polyolefine (G.M. Gale Appl. Organomet. Chem., 2 (1988) 17-31) oder in einem geeigneten Lösungsmittel (DE 1 546 982) vorgenommen werden. Zum Einbau von funktionellen Gruppen in Lösung wird die Pfropfreaktion im allgemeinen bei erhöhten Temperaturen von ca. 40°C bis zum jeweiligen Siedepunkt des Lösungsmittels vorgenommen. Geeignete Lösungsmittel sind beispielsweise Xylol, Tetrachlorkohlenstoff, Toluol, Chlorbenzol, Tetralin, Kresol oder Gemische derartiger Lösungsmittel.

Die Reihenfolge der Reaktionen (Chlorierung beziehungsweise Einbau der funktionellen Gruppen) ist unwesentlich.

Die eingebauten funktionellen Gruppen können im Anschluß an die Pfropfreaktion noch chemisch modifiziert werden. Vorzugsweise werden Modifizierungsreaktionen durchgeführt, welche die Dispergierbarkeit des Polymerharzes erhöhen oder erst zu einer Dispergierbarkeit des Polymerharzes führen. Beispielsweise können durch solche Modifizierungsreaktionen Salzgruppen erzeugt werden oder Polyoxyalkylenblöcke an das Polymerharz chemisch angeknüpft werden. Dies ist insbesondere dann von Vorteil, wenn sich durch Pfropfreaktion reaktive Gruppen wie beispielsweise Dicarbonsäureanhydridgruppen oder Epoxidgruppen besonders leicht einführen lassen, ohne daß es zur Bildung größerer Mengen an Homopolymer kommt. Besonders bevorzugt sind die Neutralisation von Säure- oder Aminogruppen und die nucleophile Öffnung von cyclischen Dicarbonsäureanhydriden mit Basen wie Aminen oder Hydroxylionen. Die Modifizierungsreaktionen können beliebig nach Einführung der funktionellen Gruppen erfolgen, also auch im Anschluß an den Dispergierschritt. Vorzugsweise erfolgt die Modifizierung der funktionellen Gruppen nach Einführung der funktionellen Gruppen und beendeter Chlorierung.

Der wäßrigen Dispersion oder Lösung des erfindungsgemäßen Polymerharzes können Hilfsmittel zugesetzt werden, welche der Koagulation der in Dispersion vorliegenden Polymerteilchen entgegenwirken und dadurch die Stabilität der Dispersion erhöhen oder erst zu einer Dispergierbarkeit des Polymerharzes führen. Bei den Hilfsmitteln handelt es sich im allgemeinen um anionische, kationische oder neutrale niedermolekulare, oligomere oder polymere Emulgatoren, Tenside oder Schutzkolloide, die in einer Menge von 1 bis 35 Gew.-%, vorzugsweise 0,5 bis 30 Gew.-% bezogen auf die Masse des amorphen Polyolefines in den waßrigen Polymerdispersionen enthalten sein können.

Beispiele von anionischen niedermolekularen, oligomeren beziehungsweise polymeren Emulgatoren oder Tensiden sind Alkali- oder Erdalkalisalze von Fettsäuren, z.B. Natriumsalze von gesättigten Fettsäuren mit 10 bis 21 Kohlenstoffatomen, Natriumsalze von ungesättigten Fettsäuren mit 12 bis 18 Kohlenstoffatomen, chlorsulfonierte und verseifte Paraffinöle, Alkylethersulfonate wie Ether von α-Sulfo-ω-hydroxy-polyethylenglykolen mit z.B. 1-Methylphenylethylphenol, Nonylphenol oder Alkylethern mit 12 bis 18 Kohlenstoffatomen, Arylalkylsulfonate wie beispielsweise mit geradkettigen oder verzweigten Butylgruppen versehene Naphthalinsulfonsäuren oder Alkylsulfate wie die Natriumsalze von langkettigen Schwefelsäurealkylestern.

Beispiele von kationischen niedermolekularen, oligomeren beziehungswiese polymeren Emulgatoren oder Tensiden sind die Salze von langkettigen Alkanreste tragenden Aminen mit 8 bis 22 Kohlenstoffatomen, die mit Sauren oder durch Alkylierung zu den Ammoniumverbindungen umgesetzt wurden, sowie analoge Phosphor- und Schwefelverbindungen.

Beispiele nichtionischer oligomerer beziehungsweise polymerer Emulgatoren oder Tenside sind Alkylpolyglykolether oder -ester wie ethoxylierte gesättigte oder ungesättigte Bindungen tragende langkettige Alkohole z.B. mit 12 bis 18 Kohlenstoffatomen, ethoxyliertes Rizinusöl, ethoxylierte (Kokos)fettsauren, ethoxyliertes Sojabohnenöl, ethoxylierte Resin- oder Rosinensäuren, ethoxylierter und gegebenenfalls propoxylierter Butyldiglykol oder ethoxylierte Alkylarylether wie ethoxyliertes geradkettiges und/oder verzweigtes Nonylphenol oder Octylphenol oder benzyliertes p-Hydroxy-biphenyl.

Geeignet als Hilfsstoffe sind weiterhin Emulgatoren oder Tenside wie ethoxylierte langkettige Alkyl- oder Alkenylamine, Lecithin, mit langkettigen Alkylisocyanaten modifizierte Umsetzungsprodukte aus Polyethylenglykolen und Diisocyanaten, Umsetzungsprodukte von Rapsöl und Diethanolamin oder ethoxylierte Umsetzungsprodukte aus Sorbitan und langkettigen Alkan- oder Alkencarbonsäuren.

Geeignet als Hilfsstoffe sind schließlich sogenannte Schutzkolloide, wie z.B. Polyvinylalkohole oder wasserlösliche Cellulosederivate wie Methylcellulose.

Die Herstellung der erfindungsgemäßen wäßrigen Dispersionen oder Lösungen des Polymerharzes wird nach bekannten Verfahren durchgeführt, indem das Polymerharz entweder in einem Lösungsmittel, beispielsweise Aceton, Tetrahydrofuran oder Toluol gelöst wird und anschließend Wasser zugesetzt und das Lösungsmittel entfernt wird oder indem hohe Scherkräfte angewandt werden, beispielsweise mit einem Ultra-Turrax-Rührer, mit Hilfe von Düsen oder Dissolverscheiben. Der Anteil des Polymerharzes an der wäßrigen Dispersion oder Lösung kann 5 bis 70 Gew.-%, vorzugsweie 20 bis 50 Gew.-% betragen.

Die erfindungsgemäßen wäßrigen Dispersionen oder Lösungen können als Beschichtungs- oder Überzugsmittel, beispielsweise als Additive bei der Formulierung von wäßrigen Lacken für die Lackierung von Polypropylen, als Klebstoff, z.B. zum Verkleben von beliebigen Substraten mit Polypropylen, oder als Filmbildner für Glasfaserschlichten verwendet werden.

Die vorliegende Erfindung soll anhand der nachfolgenden Beispiele naher erläutert werden.

Beispiele

Herstellung eines modifizierten Polymeren

100 g amorphes Terpolymer auf Basis von Propylen, Ethylen und Buten im Gewichtsverhältnis 60:10:30 mit einer mittleren Molmasse $\overline{M}$ w von 64.800, einer Uneinheitlichkeit von 4,0 und einer inherenten Viskosität von 0,49 dl/g wurden in 2000 g Tetrachlorkohlenstoff gelöst, anschließend werden in die Lösung während eines Zeitraumes von 90 Minuten unter fortwährender UV-Bestrahlung 48 g reines Chlor eingeleitet. Danach wird die Polymerlösung mit 40 g $Na_2CO_3$ versetzt, 30 Minuten gerührt und durch anschließende Filtration von Nacl und

überschüssigem $Na_2CO_3$ befreit. Die Lösung wird mit 9,8 (0,1 Mol) Maleinsäureanhydrid versetzt, anschließend werden der Lösung 1,2 g tert.-Butylperbenzoat in 50 ml $CCl_4$ bei 70°C im Verlauf einer Stunde unter $N_2$ zugetropft und die Lösung wird auf ca. 20°C abgekühlt.

Das so modifizierte Polymer wird dann in 5000 g Ethanol ausgefällt, zweimal mit Ethanol gewaschen und über Nacht getrocknet. Man erhält ein modifiziertes Polymer mit einer mittleren Molmasse von ca. 60.000 g/Mol. Es enthält 24,0 Gew.-% Chlor und 4,8 Gew.-% Sauerstoff.

Beispiel 1

Herstellung eines erfindungsgemäßen Polymerharzes und einer erfindungsgemäßen Dispersion

130 g des Polymerharzes werden in 390 ml Tetrahydrofuran unter leichtem Erwärmen gelöst. Man gibt 6,7 g Triethylamin und 4,5 g 25%ige Ammoniaklösung dazu und rührt 1 h nach. Das Polymerharz besitzt 51 Milliäquivalente anionische Salzgruppen pro 100 g Harz. Nach Zugabe von 32,5 g eines Etheralkohols, hergestellt durch Anlagerung von 7 Mol Ethylenoxid an 1 Mol Nonylphenol, wird mit 520 ml Wasser dispergiert und das Tetrahydrofuran bei einem Druck von 20 mbar und einer Temperatur von 30°C abdestilliert. Man erhält eine dünnflüssige, stabile Dispersion mit einem Feststoffgehalt von 25 Gew.-%.

Beispiel 2

Herstellung eines erfindungsgemäßen Polymerharzes und einer erfindungsgemäßen Dispersion

130 g des Polymerharzes werden in 390 ml Tetrahydrofuran unter leichtem Erwärmen gelöst. Man gibt 5,9 g N,N-Dimethylethanolamin und 4,5 g 25%ige Ammoniaklösung dazu und rührt 1 h nach. Das Polymerharz besitzt 50 Milliäquivalente anionische Salzgruppen pro 100 g Harz. Nach Zugabe von 32,5 g eines Polyetheralkohols, hergestellt durch Anlagerung von 9 Mol Ethylenoxid an 1 Mol Nonylphenol, wird mit 520 ml Wasser dispergiert und das Tetrahydrofuran bei einem Druck von 20 mbar und einer Temperatur von 30°C abdestilliert. Man erhält eine dünnflüssige, stabile Dispersion mit einem Feststoffgehalt von 25 Gew.-%.

Beispiel 3

Eine 100 x 100 mm große, handelsübliche, EPDM-Kautschuk® modifizierte Polypropylenplatte der Fa. Hoechst AG wird durch Abblasen mit ionisierter Luft entladen, von Staubpartikeln befreit und dann mittels Spritzauftrag mit einem Primer beschichtet.

Der Primer besteht aus einem Gemisch aus

| 30 Gew.-Tle | eines wäßrigen 1K-PUR-Bindemittels, beschrieben in DE-A 3 936 794, Beispiel A, |
| 30 Gew.-Tle | der Dispersion nach Beispiel 1, |
| 20 Gew.-Tle | Titandioxidpigment (Rutil), |
| 12 Gew.-Tle | Talkum, |
| 4,8 Gew.-Tle | Schwarzpigment (Ruß) und |
| 5,2 Gew.-Tle | einer 10%igen Lösung eines handelsüblichen Schwebemittels (Bentone® 38 der Fa. Kronos Titan GmbH, D-5090 Leverkusen) in Aceton. |

Nach erfolgter Applikation mit dem Primer wird die Platte 30 Minuten bei Raumtemperatur und dann 30 Minuten bei 70°C im Trockenschrank getrocknet.

Es resultiert eine sehr gute Beschichtung (Lackhaftung gemäß DIN 53157 GTO).

Beispiel 4

Es wird eine Glasfaserschlichte bestehend aus einem Gemisch aus

| 92,4 Gew.-Tle | Wasser, |
| 6 Gew.-Tle | einer Dispersion aus Beispiel 1, |
| 0,3 Gew.-Tle | γ-Glycidoxypropyltrimethoxysilan, |
| 0,8 Gew.-Tle | γ-Aminopropyletriethxysilan, |
| 0,3 Gew.-Tle | eines Fettsäureamids (Sapamin AL, Handelsprodukt der Fa. Ciba-Geigy) und |
| 0,2 Gew.-Tle | Lithiumchlorid eingesetzt. |

Die Schlichte wird über einen Kiss-Rollapplikator auf Glasfasern mit einem Durchmesser von 10 μm aufgebracht. Die Glasfasern werden zu Cakes (Bobinen) gewickelt und anschließend 10 Stunden bei 130°C getrocknet. Nach der Trocknung schneidet man die Glasfaser in 4,5 mm lange Chops. Die so erhaltenen Glasfasern sind als Verstärkungs- und Füllmaterial zur Einarbeitung in Polypropylen sehr gut geeignet.

Patentansprüche

1. Polymerharze, die in Wasser dispergierbar oder löslich sind, dadurch gekennzeichnet, daß das Harz aus einem amorphen, chlorierten, chemisch modifizierten Co- oder Terpolymer auf der Basis von Polyethylen, Polybuten und/oder Polypropylen mit einem amorphen Polypropylenanteil von mindestens 50 Gew.-% besteht, eine mittlere Molmasse (Rw) von 10.000 bis 100.000 g/Mol, eine Uneinheitlichkeit von 1,0 bis 6,5, einen Chlorgehalt von 2,5 bis 50 Gew.-% aufweist und anionische oder kationische Salzgruppen in einer Menge von 5 bis 250 Milliäquivalenten pro 100 g Polymerharz und Polyoxyalkylen-Einheiten in einer Menge von 0 bis 40 Gew.-% enthält, wobei der Anteil von Oxyethylen-Einheiten mindestens 30 Gew.-% der Oxyalkylen-Einheiten beträgt.

2. Polymerharze gemäß Anspruch 1, dadurch gekennzeichnet, daß das Harz aus einem amorphen, chlorierten, chemisch modifizierten Co- oder Terpolymer auf der Basis von Polyethylen, Polybuten und/oder Polypropylen mit einem amorphen Polypropylenanteil von mindestens 50 Gew.-% besteht, eine mittlere Molmasse ($\overline{M}$ w) von 15.000 bis 80.000 g/Mol, eine Uneinheitlichkeit von 1,5 bis 4,5, einem Gehalt an chemisch gebundenem Chlor von 15 bis 40 Gew.-%, vorzugsweise von 20 bis 35 Gew.-% aufweist und anionische oder kationische Salzgruppen in einer Menge von 20 bis 120 Milliäquivalenten pro 100 g Polymerharz und Polyoxyalkylen-Einheiten in einer Menge von 0 bis 20 Gew.-% enthält, wobei der Anteil von Oxyethylen-Einheiten mindestens 30 Gew.-% beträgt.

3. Wäßrige Dispersion oder wäßrige Lösung, die Polymerharze gemäß Anspruch 1 oder 2 enthält.

4. Wäßrige Dispersion oder wäßrige Lösung gemäß Anspruch 3, die Polymerharze mit einem Anteil von 5 bis 70 Gew.-%, vorzugsweise von 20 bis 50 Gew.-% enthält.

5. Wäßrige Dispersion oder wäßrige Lösung gemäß Anspruch 3 oder 4, dadurch gekennzeichnet, daß die Dispersion oder Lösung weitere Hilfsmittel enthält.

6. Verwendung der waßrigen Dispersionen oder Lösungen gemäß den Ansprüchen 3 bis 5 als Beschichtungs- und Überzugsmittel, als Haftvermittler, als Klebstoff oder als Filmbildner für Glassfaserschlichten.

## Claims

1. Polymer resins dispersible or soluble in water, characterised in that the resin comprises an amorphous, chlorinated, chemically modified copolymer or terpolymer based on polyethylene, polybutene and/or polypropylene with an amorphous polypropylene content of at least 50% by weight, an average molecular weight ($\overline{M}$ w) of 10 000 to 100 000 g/mol, a non-uniformity of 1.0 to 6.5, a chlorine content of 2.5 to 50% by weight and anionic or cationic salt groups in a proportion of 5 to 250 milli-equivalents per 100 g polymer resin and polyoxyalkylene units in a proportion of 0 to 40% by weight, the proportion of oxyethylene units being at least 30% by weight of the oxyalkylene units.

2. Polymer resins according to claim 1, characterised in that the resin comprises an amorphous, chlorinated, chemically modified copolymer or terpolymer based on polyethylene, polybutene and/or polypropylene with an amorphous polypropylene content of at least 50% by weight, an average molecular weight (Mw) of 15 000 to 80 000 g/mol, a non-uniformity of 1.5 to 4.5, a content of chemically bonded chlorine of 15 to 40% by weight, preferably 20 to 35% by weight, and anionic or cationic salt groups in a proportion of 20 to 120 milli-equivalents per 100 g polymer resin and polyoxyalkylene units in a proportion of 0 to 20 wt.%, the content of oxyethylene units being at least 30% by weight.

3. An aqueous dispersion or aqueous solution containing polymer resins according to claim 1 or 2.

4. An aqueous dispersion or aqueous solution according to claim 3 and containing polymer resins making up a content of 5 to 70% by weight, preferably 20 to 50% by weight.

5. An aqueous dispersion or aqueous solution according to claim 3 or 4, characterised in that the dispersion or solution contains other adjuvants.

6. Use of the aqueous dispersions or solutions according to claims 3 to 5 as coating compounds, primers, adhesive or film-formers for glass fibre sizes.

## Revendications

1. Résines polymères dispersables ou solubles dans l'eau, caractérisées en ce que la résine consiste en un copolymère ou polymère ternaire amorphe, chloré, modifié chimiquement, à base de polyéthylène, de polybutène et/ou de polypropylène, à une teneur en polypropylène amorphe d'au moins 50 % en poids, avec une masse moléculaire moyenne ($\overline{M}$ w) de 10 000 à 100 000 g/mol, une hétérogénéité de 1,0 à 6,5, une teneur en chlore de 2,5 à 50 % en poids et une teneur en groupes salins anioniques ou cationiques de 5 à 250 milliéquivalents pour 100 g de la résine polymère et une teneur en motifs polyoxyalkylène de 0 à 40 % en poids, les motifs oxyéthylène représentant au moins 30 % du poids des motifs oxyalkylène.

2. Résines polymères selon revendication 1, caractérisées en ce que la résine consiste en un copolymère ou polymère ternaire amorphe, chloré, modifié chimiquement, à base de poléthylène, de polybutène et/ou de polypropylène, à une teneur en polypropylène amorphe d'au moins 50 % en poids, avec une masse moléculaire moyenne ($\overline{M}$ w) de 15 000 à 80 000 g/mol, une hétérogénéité de 1,5 à 4,5, une teneur en chlore chimiquement combiné de 15 à 40 % en poids, de préférence de 20 à 35 % en poids, une teneur en groupes salins anioniques ou cationiques de 20 à 120 milliéquivalents pour 100 g de la résine polymère, et une teneur en motifs polyoxyalkylène de 0 à 20 % en poids, les motifs oxyéthylène représentant au moins 30 % en poids.

3. Dispersion aqueuse ou solution aqueuse contenant les résines polymères selon revendication 1 ou 2.

4. Dispersion aqueuse ou solution aqueuse selon revendication 3, contenant les résines polymères à une concentration de 5 à 70 %, de préférence de 20 à 50 % en poids.

5. Dispersion aqueuse ou solution aqueuse selon revendication 3 ou 4, caractérisée en ce que la dispersion ou solution contient d'autres produits auxiliaires.

6. Utilisation des dispersions ou solutions aqueuses selon les revendications 3 à 5 en tant que produits d'enduction et de revêtement, en tant qu'agents d'adhérence, en tant que colles ou en tant que constituants filmogènes pour des produits d'ensimage pour fibres de verre.